# EUROPEAN PATENT APPLICATION

(11) **EP 4 645 258 A1**
(43) Date of publication of application: **05.11.2025**
(21) Application number: 25174062.7
(22) Date of filing: 02.05.2025
(51) Int. Cl.: G06V 20/52, G06V 20/62, G06V 10/764

(54) **SYSTEMS AND METHODS ASSOCIATED WITH A USER INTERFACE OF AN ACQUISITION DEVICE**

(30) Priority: 02.05.2024 IL 31256224
(71) Applicant: Seetrue Screening Ltd, 6879139 Tel Aviv (IL)
(72) Inventor: FRENKEL, Assaf, Ramat Hasharon (IL); MARCIANO, Abraham, Jerusalem (IL); BEISER, Koren, Kfar Saba (IL)
(74) Representative: Mewburn Ellis LLP

(57) **Abstract**

There are provided systems and methods comprising obtaining data displayed on a user interface, informative of one or more processing operations used to generate at least one given image informative of one or more elements acquired by an acquisition device, using the data to determine whether the at least one given image meets a validity criterion, and responsive to determining that the validity criterion is met, using the at least one given image, or data informative thereof, and a detection algorithm, to determine whether one or more suspicious elements are present in the at least one given image.

## Description

### TECHNOLOGICAL FIELD

The invention is in the field of user interfaces, in particular (but not limited to) user interfaces associated with acquisition devices.

### BACKGROUND

At a security checkpoint (for example in an airport), an acquisition device is used in order to acquire an image of an item carried by a person.

The image can be verified by an operator and/or by a computerized system in order to detect the presence of a prohibited object (e.g., a weapon).

Malicious persons use various techniques in order to prevent detection of the prohibited object in their items.

There is therefore a need to propose new systems and methods in this technical field.

### GENERAL DESCRIPTION

In accordance with certain aspects of the presently disclosed subject matter, there is provided a system comprising one or more processing circuitries configured to obtain data displayed on a user interface, informative of one or more processing operations used to generate at least one given image informative of one or more elements acquired by an acquisition device, use the data to determine whether the at least one given image meets a validity criterion, and responsive to determining that the validity criterion is met, use the at least one given image, or data informative thereof, and a detection algorithm, to determine whether one or more suspicious elements are present in the at least one given image.

In addition to the above features, the system according to this aspect of the presently disclosed subject matter can optionally comprise one or more of features (i) to (xvii) below, in any technically possible combination or permutation:
i. the system is configured to, responsive to determining that the validity criterion is not met, prevent the at least one given image from being fed to the detection algorithm;
ii. a display of the given image depends on said one or more processing operations;
iii. the data correspond to at least part of one or more graphical elements of the user interface displaying information on said one or more processing operations;
iv. the validity criterion depends on training images used to train the detection algorithm;
v. the validity criterion is met when one or more processing operations used to generate the given image correspond to one or more processing operations used to generate training images which have been used to train the detection algorithm;
vi. the data informative of the one or more processing operations comprises data informative of a zoom used to display the given image;
vii. the data informative of the one or more processing operations comprises data informative of one or more filtering operations used to generate the given image;
viii. the data informative of the one or more processing operations comprises a display mode of the given image;
ix. obtaining said data comprises using a machine learning model to determine, in the user interface, a position and a type of one or more graphical elements informative of the one or more processing operations;
x. the data informative of the one or more processing operations used to generate the at least one given image comprises data informative of one ore more graphical elements of the user interface, wherein the system is configured to use a machine learning model to determine, in a setting image of the user interface, data D_{graph_elements} informative of a position and a type of the one or more graphical elements informative of the one or more processing operations, and to use said data D_{graph_elements} to extract the data informative of one or more graphical elements of the user interface;
xi. the system is configured to obtain a machine learning model which has been trained to determine, in each given training image of a plurality of training images, a location and a type of one or more graphical elements of a given user interface, informative of processing operations used to generate an image of one or more elements acquired by a given acquisition device;
xii. the system is configured to use a machine learning model to extract, from a setting image of the user interface in which one or more graphical elements of the user interface are informative of one or more processing operations used to generate an image meeting the validity criterion, one or more reference images of said one or more graphical elements;
xiii. the system is configured to compare at least part of the data displayed on the user interface with the one or more reference images of said one or more graphical elements to determine whether the given image matches the validity criterion;
xiv. the data is informative of one or more graphical elements of the user interface, wherein using the data to determine whether the at least one given image meets the validity criterion comprises comparing the data with reference data informative of the one or more graphical elements in a state in which they are informative of one or more processing operations used to generate an image matching the validity criterion;
xv. the system is configured to determine that the given image meets the validity criterion when the data matches the reference data;
xvi. the system is configured to extract, from a setting image of the user interface in which the one or more graphical elements are informative of one or more processing operations used to generate an image matching the validity criterion, the reference data; and
xvii. the system is configured to use a machine learning model trained to determine a location and a type of the one or more graphical elements to extract, from the setting image, the reference data.

In accordance with certain aspects of the presently disclosed subject matter, there is provided a method comprising, by one or more processing circuitries, obtaining data displayed on a user interface, informative of one or more processing operations used to generate at least one given image informative of one or more elements acquired by an acquisition device, using the data to determine whether the at least one given image meets a validity criterion, and responsive to determining that the validity criterion is met, using the at least one given image, or data informative thereof, and a detection algorithm to determine whether one or more suspicious elements are present in the at least one given image.

In addition to the above features, the method according to this aspect of the presently disclosed subject matter can optionally comprise one or more of features (i) to (xvii) above, in any technically possible combination or permutation:
In accordance with certain aspects of the presently disclosed subject matter, there is provided as non-transitory computer readable medium comprising instructions that, when executed by one or more processing circuitries, cause the one or more processing circuitries to perform the method described above.

In accordance with other aspects of the presently disclosed subject matter, there is provided a system comprising one or more processing circuitries, configured to obtain a set of data displayed on a user interface comprising one or more graphical elements informative of one or more processing operations used to generate at least one given image informative of one or more elements acquired by an acquisition device, and use a machine learning model to extract, from the set of data, for at least one given graphical element of the user interface, a reference image of the at least one given graphical element.

In addition to the above features, the system according to this aspect of the presently disclosed subject matter can optionally comprise one of more features (xviii) to (xxviii) below, in any technically possible combination or permutation:
xviii. the at least one given image meets a validity criterion;
xix. the system is configured to use the machine learning model to determine, for the at least one given graphical element, a location and type of said at least one given graphical element;
xx. the machine learning model has been trained to determine, in each given training image of a plurality of training images, a location and a type of said given graphical element;
xxi. the validity criterion is met when the one or more processing operations correspond to one or more predefined processing operations;
xxii. the validity criterion depends on training images used to train a detection algorithm associated with the acquisition device;
xxiii. the system is configured to obtain a second set of data displayed on the user interface, in which the one or more graphical elements are informative of one or more processing operations used to generate a second given image informative of one or more elements acquired by the acquisition device, and compare at least part of the second set of data with the reference image to determine whether the second given image meets the validity criterion;
xxiv. the comparison includes extracting an image of the given graphical element from the second set of data, and comparing the image of the given graphical element with the reference image;
xxv. the system is configured to determine that the second given image meets the validity criterion when the image of the given graphical element matches the reference image;
xxvi. the system is configured to, responsive to determining that the second given image meets the validity criterion, use the second given image, or data informative thereof, and a detection algorithm to determine whether one or more suspicious elements are present in the at least one given image;
xxvii. the system is configured to, responsive to determining that the second given image does not meet the validity criterion, prevent the second given image from being fed to a detection algorithm associated with the acquisition device; and
xxviii. the data informative of the one or more processing operations used to generate the given image comprises at least one of: data informative of a zoom used to display the given image, data informative of one or more filtering operations used to generate the given image, or a display mode of the given image.

In addition to the above features, the system according to this aspect of the presently disclosed subject matter can optionally comprise one or more of features (i) to (xvii) above, in any technically possible combination or permutation.

In accordance with certain aspects of the presently disclosed subject matter, there is provided a method comprising, by one or more processing circuitries, obtaining a set of data displayed on a user interface comprising one or more graphical elements informative of one or more processing operations used to generate at least one given image informative of one or more elements acquired by an acquisition device, and using a machine learning model to extract, from the set of data, for at least one given graphical element of the user interface, a reference image of the at least one given graphical element.

In addition to the above features, the method according to this aspect of the presently disclosed subject matter can optionally comprise one or more of features (i) to (xvii) and one of more features (xviii) to (xxviii), in any technically possible combination or permutation:
In accordance with certain aspects of the presently disclosed subject matter, there is provided as non-transitory computer readable medium comprising instructions that, when executed by one or more processing circuitries, cause the one or more processing circuitries to perform the method described above.

In accordance with certain aspects of the presently disclosed subject matter, there is provided a system comprising one or more processing circuitries, configured to obtain a given image, extract, from the given image, an image of each given graphical element of one or more graphical elements of the given image, compare, for said each given graphical element, the image of the given graphical element with a reference image associated with the given graphical element, and based on the comparison, determine whether each graphical element is in a desired state.

In addition to the above features, the system according to this aspect of the presently disclosed subject matter can optionally comprise one of more features (xxix) to (xxxiii) below, in any technically possible combination or permutation:
xxix. the system is configured to use a machine learning model to extract, from a setting image in which the one or more graphical elements are in the desired state, one or more reference images of said one or more graphical elements;
xxx. the system is configured to use the machine learning model to extract, from the setting image, a position and a type of the one or more graphical elements;
xxxi. the machine learning model has been trained with a training set of training images, wherein each given training image of the training set includes one or more given graphical elements matching said one or more graphical elements according to a matching criterion, each given training image is associated with a label indicative of a position and a type of said one or more given graphical elements;
xxxii. the system is configured to determine, for at least one given graphical element, a type or a location of said at least one given graphical element, and use said type or said location to obtain the reference image associated with said at least one given graphical element; and
xxxiii. the system is configured to, responsive to determining that each graphical element is in the desired state, trigger an action comprising display of data.

In addition to the above features, the system according to this aspect of the presently disclosed subject matter can optionally comprise one or more of features (i) to (xvii) and one of more features (xviii) to (xxviii), in any technically possible combination or permutation.

In accordance with certain aspects of the presently disclosed subject matter, there is provided a method comprising, by one or more processing circuitries, obtaining a given image, extract, from the given image, an image of each given graphical element of one or more graphical elements of the given image, comparing, for said each given graphical element, the image of the given graphical element with a reference image associated with the given graphical element, and based on the comparison, determining whether each graphical element is in a desired state.

In addition to the above features, the method according to this aspect of the presently disclosed subject matter can optionally comprise one or more of features (i) to (xvii), one of more features (xviii) to (xxviii), and one of more features (xxix) to (xxxiii), in any technically possible combination or permutation.

In accordance with certain aspects of the presently disclosed subject matter, there is provided as non-transitory computer readable medium comprising instructions that, when executed by one or more processing circuitries, cause the one or more processing circuitries to perform the method described above.

According to some embodiments, the proposed solution enables automatic setting of a system configured to detect suspicious elements in images acquired by an acquisition device.

According to some embodiments, the proposed solution reduces intervention of a human operator.

According to some embodiments, the proposed solution enables to filter out irrelevant and/or non-optimal images used to detect the presence of suspicious elements. Detection of prohibited objects is therefore improved.

According to some embodiments, the proposed solution enables automatic detection of the state of a user interface associated with an acquisition device, even in the presence of variations in the display of the user interface (due e.g., to different versions of the user interface, noise, manipulation of the operator, different versions of the acquisition device, etc.). The proposed solution is therefore robust.

According to some embodiments, the proposed solution enables automatic detection of the state of a user interface and/or of graphical elements.

According to some embodiments, the proposed solution is adaptive to different acquisition devices and/or different user interfaces and/or different displayed data including graphical elements.

According to some embodiments, the proposed solution is usable in various technical fields.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
- **Fig. 1A** illustrates an architecture of a system according to some embodiments of the invention;
- **Fig. 1B** illustrates a non-limitative example of a user interface associated with an acquisition device;
- **Fig. 2** illustrates a flow chart of an embodiment of a method of detecting whether an image displayed on a user interface is valid for detecting suspicious objects;
- **Fig. 3A** illustrates a non-limitative example of a user interface which includes an image which is valid for detecting suspicious objects;
- **Fig. 3B** illustrates a non-limitative example of a user interface which includes an image which is not valid for detecting suspicious objects;
- **Fig. 3C** illustrates a non-limitative example of a user interface which includes an image which is not valid for detecting suspicious objects;
- **Fig. 4A** illustrates a flow chart of an embodiment of a method of using a machine learning model to detect the location and the type of graphical elements of a user interface;
- **Figs. 4B** to **4D** illustrate non-limitative examples of user interfaces which can be used in the method of **Fig. 4A**;
- **Fig. 5A** illustrates a flow chart of an embodiment of a method of training a machine learning model to detect the location and the type of graphical elements of a user interface;
- **Figs. 5B** and **5C** illustrate non-limitative examples of the method of **Fig. 5A**;
- **Fig. 6** illustrates a flow chart of an embodiment of a method of generating reference data for graphical elements of a user interface;
- **Fig. 7** illustrates a non-limitative example of the method of **Fig. 6**;
- **Fig. 8** illustrates a flow chart of an embodiment of a method of detecting whether an image displayed on a user interface is valid for detecting suspicious objects;
- **Fig. 9** illustrates a non-limitative example of the method of **Fig. 8**;
- **Fig. 10** illustrates a flow chart of an embodiment of a method of training a machine learning model to detect the location and the type of graphical elements;
- **Fig. 11** illustrates a non-limitative example of the method of **Fig. 10**;
- **Fig. 12** illustrates a flow chart of an embodiment of a method of generating reference data for graphical elements;
- **Fig. 13** illustrates a non-limitative example of the method of **Fig. 12****;**
- **Fig. 14** illustrates a flow chart of an embodiment of a method of detecting whether graphical elements displayed on a display unit are in a desired state;
- **Fig. 15** illustrates a non-limitative example of the method of **Fig. 12****.**

### DETAILED DESCRIPTION OF EMBODIMENTS

In the specification, reference will be made to "prohibited objects". This includes (but is not limited to) e.g., explosives, weapons (guns, knives, grenades, etc.), etc. Although a typical example of a prohibited object is a threat object, this is however not limitative. The prohibited objects can include any object considered as prohibited at a control or security checkpoint (according to rules set e.g., by an administrator of the security checkpoint and/or by law) and should therefore be detected. For example, a prohibited object in a facility can include e.g., a USB drive, a cellular phone, etc.

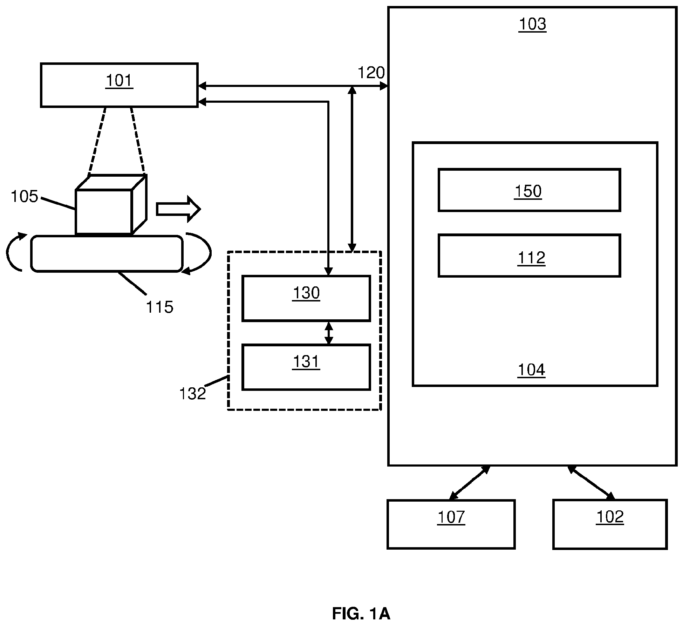

Attention is drawn to **Fig. 1A****,** which illustrates a system **100** which can be used at a control or security checkpoint, such as in an airport. This is however not limitative, and the system **100** can be used in various other applications.

**Fig. 1A** illustrates an acquisition device **101** (also called image acquisition device), which is operative to acquire one or more images of one or more elements **105** (personal carry-on, luggage, etc.).

Generally, the one or more elements **105** are placed on a conveyor belt **115,** which enables successive scanning of different elements (or of the same element(s) repetitively).

The acquisition device **101** includes for example an X-ray acquisition device, a scanner, a computerized tomography (CT) scan, or other types of acquisition devices (e.g., body scanner). The acquisition device **101** can also include a camera (operating e.g., in the visible range). This list is not limitative.

Generally, at the security checkpoint of an airport, the element(s) **105** are placed in a bin in which the passenger is requested to place at least some of his personal carry-ons, such as (but not limited to): a container, a bag, clothing items, a shoe, certain liquids, certain electronic devices, etc. These examples are not limitative.

The acquisition device **101** generally includes (or is operatively coupled to) a display unit 130 (such as a screen), in which an operator can visualize the images acquired by the acquisition device **101.** The acquisition device **101** can include (or can be operatively coupled to) an interface **131** (e.g., hardware interface, also called "console") enabling interaction by an operator with the acquisition device **101** and/or with the conveyor belt **115.** The display unit **130** and the interface **131** may be part of the same device. This is however not limitative.

The interaction of the operator with the acquisition device **101** can include commands enabling control of the operation of the acquisition device **101** and/or the conveyor belt **115.**

The operator can use the interface **131** (console) to perform operations on the image(s) acquired by the acquisition device **101.** The operations can include processing operations (also called manipulations), such as image processing operations, which impact the visual appearance of the images displayed on the display unit **130.** These processing operations can correspond to post-processing operations, which are applied to the raw images acquired by the acquisition device **101.**

The processing operations can include, for example: modification/setting of the zoom (zoom-in, zoom-out), modification/setting of the colors of the image (e.g., conversion from a colored image to a black and white image, or conversely, or other color modifications), modification/setting of the scale of the image, application of filter(s) to the image, etc. This list is not limitative and other processing operations can be used.

The interface **131** can include buttons enabling the operator to control operations performed on the image(s) acquired by the acquisition device **101.** A first button can correspond to the "zoom", a second button can correspond to the color/filter, etc.

Note that the interface **131** can be a hardware interface (including e.g. buttons which can be pressed by the operator) and/or can be implemented using a computer-implemented interface. In case the interface **131** is a computer-implemented interface, the operator can select (using a tactile screen and/or using a mouse) icons displayed on the computer-implemented interface in order to perform operations on the images acquired by the acquisition device **101.** In some examples, the interface 131 can include a combination of hardware elements (e.g., buttons) and software elements (virtual icons that can be selected by the operator).

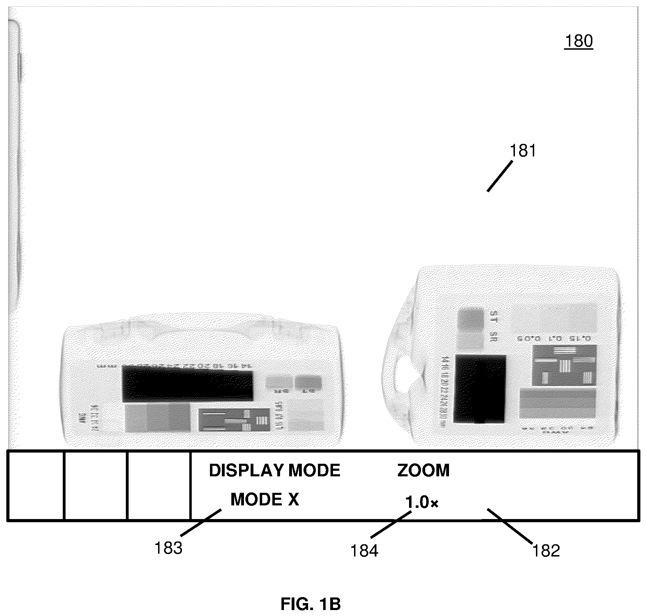

A user interface **180** (such as a graphical user interface - GUI) can be displayed on the display unit **130.** A non-limitative example of the user interface **180** is illustrated in **Fig. 1B****.** The user interface **180** can include the image **181.** As visible in **Fig. 1B****,** the image **181** is informative of elements acquired by the acquisition device **101.** In particular, the image **181** corresponds to the raw image of the one or more elements acquired by the acquisition device **101,** after its post-processing according to one or more (optional) processing operation(s). The user interface **180** further includes data **182** informative of the processing operation(s) that have been used to generate the image **181.** The data **182** can typically include one or more graphical elements (such as icons).

Note that the processing operation(s) can be selected by an operator and/or can be preset and/or can be selected by an algorithm, using various rules. In this example, the user interface **180** includes data **182** informative of the processing operations which enabled generating the image **181**: in this non-limitative example, data **182** includes the display mode **183** selected by the operator (which corresponds to the type of filter used to generate the image **181)** and the zoom **184** selected by the operator (which impacts the dimensions of the image **181).**

The acquisition device **101** can be operatively connected to a computer-implemented system **103.** System **103** can be part of the acquisition device **101,** or external to the acquisition device **101,** or partially part of the acquisition device **101** and partially external to it.

System **103** is operative to receive one or more image(s) **120** of the one or more element(s) **105** (or data informative of the image(s) **120**) acquired by the acquisition device **101.** These images can correspond to the images displayed on the display unit **130** to the operator. As mentioned above, these images may have been processed (using image processing operations) following instructions of the operator.

The images **120** can be extracted by taking screenshots from the display unit **130.** This can be performed by using a video frame grabber (see https://en.wikipedia.org/wiki/Frame grabber which provides various examples of analog frame grabbers and digital frame grabbers) and/or a capture device (also called capture card). The video frame grabber or the capture device can be operatively coupled to the acquisition device **101** or to the display unit **130** to extract the images displayed on the display unit **130.**

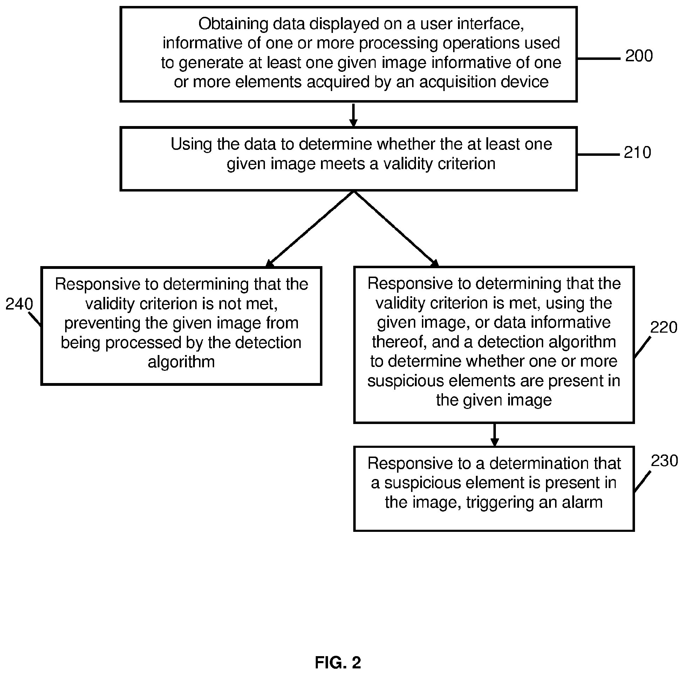

System **103** includes at least one processing circuitry **104** (or a plurality of processing circuitries **104**), including one or more processors and one or more memories. The processing circuitry **104** is configured to provide processing necessary for operating system **103,** as further detailed in the various embodiments described hereinafter. System **103** can be used to perform various methods described hereinafter, such as (but not limited to) the methods described with reference to **Figs. 2****,** **4A****,** **5A****,** **6****,** **8****,** **10****,** **12** and **14****.**

In **Fig. 1A****,** system **103** is coupled to a hardware-based input interface **102** (e.g., a keyboard) which can be used e.g., by an operator to interact with system **103.**

The processing circuitry **104** can be configured to implement at least one (or more) algorithm **112.** In particular, a list of computer-readable instructions (e.g., an executable code/executable program) stored in a computer memory, when executed by the processing circuitry **104,** enables execution of the algorithm **112.**

The algorithm **112** is operative to detect, in images of element(s) (e.g., luggage, personal carry-on, etc.) acquired by the acquisition device **101**, the presence of one or more suspicious elements. A suspicious element is an element which is suspected (with a certain likelihood, above a threshold) to correspond to a prohibited object.

In some examples, suspicious elements can include elements that correspond to anomalies in the image. An anomaly can correspond to an element which is generally not present in an image which is not associated with a prohibited object. As a consequence, the suspicious element(s) may correspond to prohibited object(s) and should therefore be indicated to the operator. Note that it can occur that suspicious elements detected by the algorithm do not correspond to prohibited object(s).

In some examples, a manual check of an operator is required to determine whether the one or more suspicious objects actually correspond to prohibited objects.

In some examples, the algorithm **112** corresponds to a machine learning model. It may have been trained using supervised learning, in which positive samples (images including prohibited object(s), together with a label indicative of the position of the prohibited object(s)) and negative samples (images which do not include prohibited object(s), together with a label indicative of their absence), are fed to the machine learning model during its training.

The machine learning model can include, for example, for example, a neural network, such as a deep neural network (DNN). Examples of machine learning models include Convolutional Neural Network (CNN), or specific types of CNN such as, R-CNN, Region-Based Convolutional Neural Networks, Fast R-CNN, and YOLO (You Only Look Once - which is a type of Fast R-CNN), etc. This is not limitative, and other machine learning models can be used.

A deep neural network (DNN) comprises layers organized in accordance with a respective DNN architecture. Optionally, at least some of the layers can be organized in a plurality of DNN sub-networks. Each layer of the ML (Machine Learning) model can include multiple basic computational elements (CE), typically referred to in the art as dimensions, neurons, or nodes.

Generally, computational elements of a given layer can be connected with CEs of a preceding layer and/or a subsequent layer. Each connection between a CE of a preceding layer and a CE of a subsequent layer is associated with a weighting value. A given CE can receive inputs from CEs of a previous layer via the respective connections, each given connection being associated with a weighting value which can be applied to the input of the given connection. The weighting values can determine the relative strength of the connections and thus the relative influence of the respective inputs on the output of the given CE. The given CE can be configured to compute an activation value (e.g., the weighted sum of the inputs) and further derive an output by applying an activation function to the computed activation. The activation function can be, for example, an identity function, a deterministic function (e.g., linear, sigmoid, threshold, or the like), a stochastic function, or other suitable function. The output from the given CE can be transmitted to CEs of a subsequent layer via the respective connections. Likewise, as above, each connection at the output of a CE can be associated with a weighting value which can be applied to the output of the CE prior to being received as an input of a CE of a subsequent layer. Further to the weighting values, there can be threshold values (including limiting functions) associated with the connections and CEs.

The weighting and/or threshold values of the DNN can be initially selected prior to training and can be further iteratively adjusted or modified during training to achieve an optimal set of weighting and/or threshold values in a trained ML network. After each iteration, a difference (also called loss function) can be determined between the actual output produced by the ML network, and the label or class associated with the respective training set of data. The difference can be referred to as an error value. Training can be determined to be complete when a cost or loss function indicative of the error value is less than a predetermined value, or when a limited change in performance between iterations is achieved. Optionally, at least some of the ML subnetworks (if any) can be trained separately, prior to training the entire ML network.

A set of ML network input data used to adjust the weights/thresholds of a deep neural network is referred to hereinafter as a training set.

According to some examples, the algorithm **112** can implement a segmentation algorithm (e.g., a semantic segmentation algorithm, such as, but not limited to, U-net, Mask-RCNN), and/or an object detection algorithm (such as, but not limited to, R-CNN, Region-Based Convolutional Neural Networks, Fast R-CNN, and YOLO (You Only Look Once), etc.).

This is not limitative, and other algorithms adapted to detect suspicious objects in images can be used.

Upon processing the image **120,** system **103** can send (using an adapted interface) data informative of the output of the processing to a device **107** enabling a visual and/or audio representation of the processing. Device **107** includes, e.g., a screen and/or a loudspeaker. In some examples, data informative of the output of the processing is transmitted to the display unit **130.** The display unit **103** displays at least part or all of this data.

In some embodiments, system **103** can trigger an alert and/or send instructions to another device to trigger an alert. The alert can be transmitted, for example, to a personal device of an operator, such as a cellphone, a laptop, a tablet, etc.

It is noted that at least part of system **103** illustrated in **Fig. 1A** can be implemented in a distributed computing environment, in which the aforementioned functional modules shown in **Fig. 1A** can be distributed over several local and/or remote devices and can be linked through a communication network.

Attention is now drawn to **Fig. 2****.**

Assume that an image is informative of one or more elements acquired by the acquisition device **101** and has been generated using one or more processing operations. The processing operations can be applied to a raw image of the one or more elements, as acquired by the acquisition device **101,** or to an image derived from the raw image. As mentioned above, different processing operations (zoom, filter, etc.) may have been used, which impact the visual display of the image that has been generated. The nature of the processing operations can be selected by an operator (and/or can be predefined) and data D_{processing} informative of the processing operation(s) (see e.g., reference **182** in **Fig. 1A**) can be displayed on a user interface (see e.g., user interface **180**).

The method of **Fig. 2** can include obtaining (operation **200)** data displayed on the user interface.

In particular, operation **200** can include extracting at least part of, or the whole image(s) displayed on the user interface using a video frame grabber and/ or a capture device. The data obtained at operation **200** can include or can correspond to the data D_{processing} informative of the one or more processing operation(s) used to generate the image informative of the element(s) acquired by the acquisition device **101.** As mentioned above, the data D_{processing} can correspond to (at least some) graphical elements (such as icons and/or some icons and/or values associated with icons and/or text associated with icons) displayed to the user on the user interface, which displays information on the processing operation(s).

In **Fig. 1B****,** the data D_{processing} includes the value of the zoom, and the selected display mode. This is not limitative, and other data D_{processing} informative of the processing operations used to generate the image can be displayed on the user interface and can be obtained at operation **200.** As mentioned with reference to **Fig. 1B****,** the image may be also displayed on the display unit **130,** and, in particular, in the user interface **180.** This is however not limitative, and it can occur that the image is not displayed simultaneously on the user interface, but is only stored in a computer memory.

Note that for each image, different data D_{processing} can be obtained: indeed, each image may be associated with different processing operation(s) that enabled its generation. This can be due to the selection, by the operator, of different processing operations to be applied to each image.

The method of **Fig. 2** further includes using (operation **210**) the data D_{processing} to determine whether the at least one given image meets a validity criterion.

The validity criterion can dictate whether the given image is adapted to be further processed by the detection algorithm **112** or should not be further processed by the detection algorithm **112.**

According to some examples, the validity criterion depends on the detection algorithm **112.** In particular, the validity criterion can depend on the training of the detection algorithm **112.** The training of the detection algorithm **112** corresponds to a phase in which the detection algorithm **112** is fed with training images, in order to learn how to determine the presence and the location of suspicious elements (which are likely to correspond to prohibited objects) in images acquired by an acquisition device. The training phase precedes the prediction phase, in which the trained detection algorithm **112** is used to detect suspicious elements in images acquired by an acquisition device.

In general, the detection algorithm **112** has been trained to detect suspicious elements (which have a certain likelihood to correspond to prohibited objects) in training images corresponding to images acquired by the acquisition device **101,** which are associated with a label indicative of the presence of prohibited objects in the training images. The label may have been provided by an operator (supervised learning). The training images can correspond to raw images acquired by the acquisition device **101** and/or to images acquired by the acquisition device **101,** which have been further processed according to processing operation(s). As mentioned above, the processing operation(s) can be selected by an operator, and data informative of the processing operation(s) can be displayed on a user interface (see user interface **180).**

The detection algorithm **112** better performs in the detection of prohibited objects in images which are similar to the training images. In particular, it is recommended to feed the detection algorithm **112** with images which have not been processed by the operator, or which have been processed with similar processing operation(s) as the training images. If the detection algorithm **112** receives images which have been processed differently from the training images, it can be expected that the detection algorithm **112** will provide a higher rate of false positive and/or false negative. For example, assume that the detection algorithm **112** has been mostly or only trained with training images associated with a zoom equal to one. It is therefore expected that the detection algorithm **112** will underperform if it is fed with images associated with a large zoom-in, or a large zoom-out.

In addition, the validity criterion can dictate that an image is invalid for other reasons. For example, the processing operations can modify the image such that part of the image can be omitted and/or manipulated. This can make the detection algorithm **112** miss prohibited object(s) in the image. The validity criterion may therefore indicate that this kind of processing operation makes the images invalid for being further processed by the detection algorithm **112.**

The validity criterion can dictate that an image is a valid image (which can be fed to the detection algorithm **112** for detection of prohibited objects), when the processing operation(s) (as reflected in the user interface), used to generate the image, correspond to a predefined set of one or more processing operations. At least part of the set of one or more processing operations can correspond to the one or more processing operations used to generate the training images, which have been used to train the detection algorithm **112.** This is not limitative. The set of one or more processing operations can be defined based on other considerations, such as whether the image has a sufficient quality for detection of suspicious objects, or whether the image has a required size and/or a required zoom and/or required colour(s) for efficient detection of suspicious objects, etc.

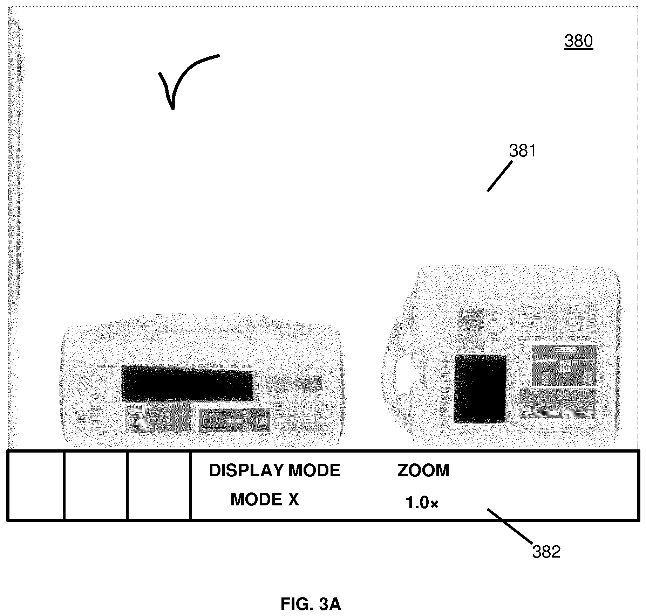

This can be illustrated by the examples depicted in **Figs. 3A** to **3C****.**

In **Fig. 3A****,** the user interface **380** includes data **382** which indicates that the image **381** is displayed with a zoom equal to one, and under a display mode called "mode X". In this example, this image **381** meets the validity criterion and can be fed to the detection algorithm **112** for further detection of prohibited objects.

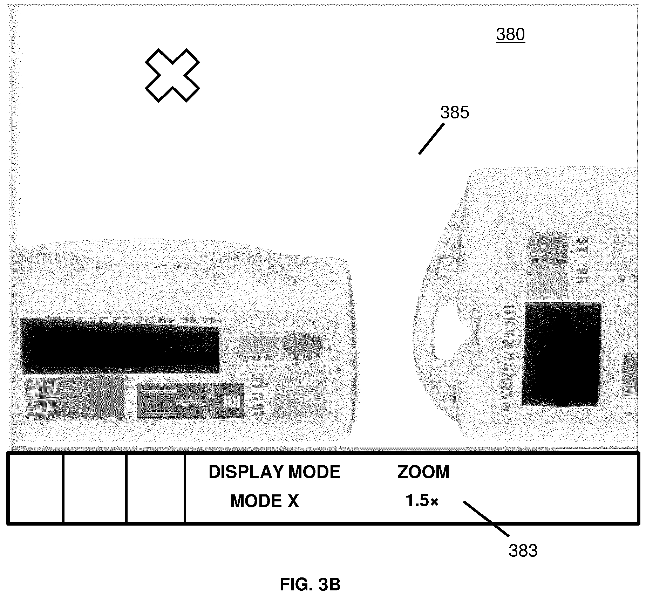

In **Fig. 3B****,** the user interface **380** includes data **383** which indicates that the image **385** is displayed with a zoom equal to "1.5", and under a display mode called "mode X". In this example, the image does not meet the validity criterion (since the detection algorithm **112** has been fed, during its training, with training images associated with a zoom equal to "1.0") and should not be fed to the detection algorithm **112** for further detection of prohibited objects.

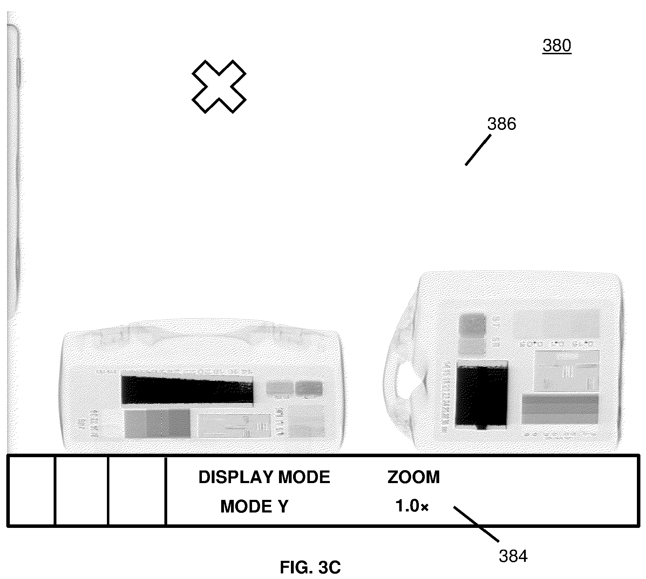

In **Fig. 3C****,** the user interface **380** includes data **384** which indicates that the image **386** is displayed with a zoom equal to "1.0", and under a display mode called "mode Y". In this mode "Y", elements of the image displayed under a certain colour are removed from the image. In this example, this image **386** does not meet the validity criterion (since a significant part of the image has been removed) and should not be fed to the detection algorithm **112** for further detection of prohibited objects.

Since data informative of the processing operation(s) used to generate the image can be extracted from the user interface, it can be determined from this data which processing operation(s) have been applied to the image, and whether this image, processed according to these processing operations(s), meets the validity criterion.

Extraction of the data informative of the processing operations of the image can rely on one or more object detection algorithm(s) and/or one or more image recognition algorithm(s), which detects the location of the graphical elements (icons) of the user interface, and/or on some knowledge of the location of the graphical elements (icons) of the user interface. Knowledge on the location of the graphical elements in the user interface can be known *a priori,* and/or can be learned using machine learning models.

Non-limitative examples of method(s) enabling extracting, from the user interface, the data informative of the processing operations of the image, and determination of whether the validity criterion is met, are provided hereinafter.

Assume that it has been determined that the validity criterion is met for a given image. Responsive to this determination, the method of **Fig. 2** can include using (operation **220)** the given image, or data informative thereof, and the detection algorithm **112,** to determine whether one or more suspicious elements are present in the given image. In particular, the given image can be fed to the detection algorithm **112.** This can be performed automatically, without requiring any intervention of an operator.

If the algorithm **112** detects the presence of a suspicious object, an alarm can be raised (operation **230).** This alarm can indicate to the operator that there is a certain likelihood that a prohibited object is present. In some examples, it can indicate the location of the prohibited object in the image, its type, or other attributes. In some examples, it can output a probability that the suspicious object corresponds to a prohibited object. If the algorithm **112** does not detect the presence of any suspicious object, an alarm is not raised.

Assume that it has been determined that the validity criterion is not met for a given image. Responsive to this determination, the method of **Fig. 2** can include preventing (operation **240)** the given image from being processed by the detection algorithm **112.** The given image is therefore not fed to the detection algorithm **112** for detecting suspicious elements.

In other words, the method of **Fig. 2** enables feeding the detection algorithm **112** only with relevant images, which can be used to efficiently detect prohibited objects, and prevents the detection algorithm **112** from being fed with images which could generate a false alarm and/or images of lower quality.

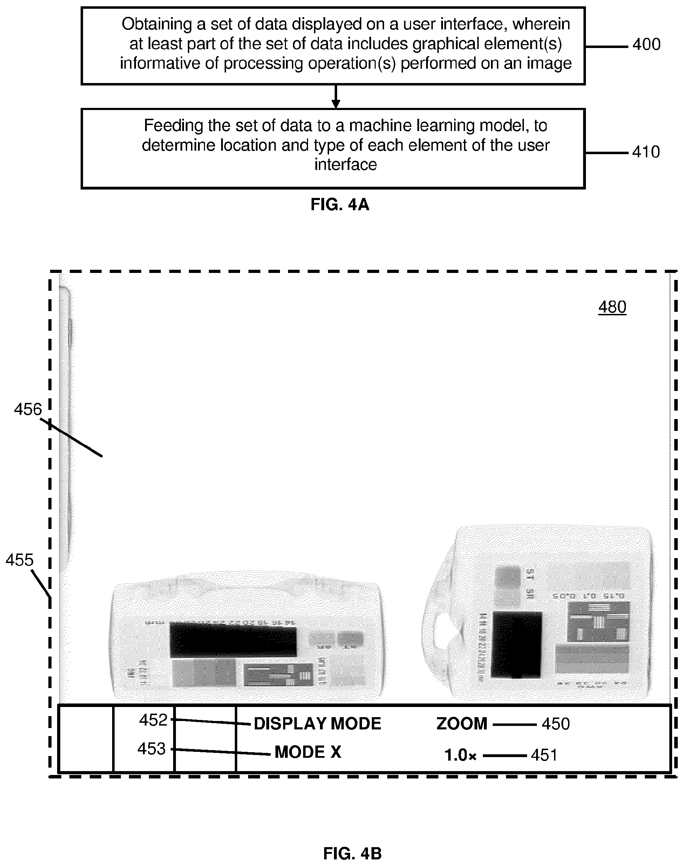

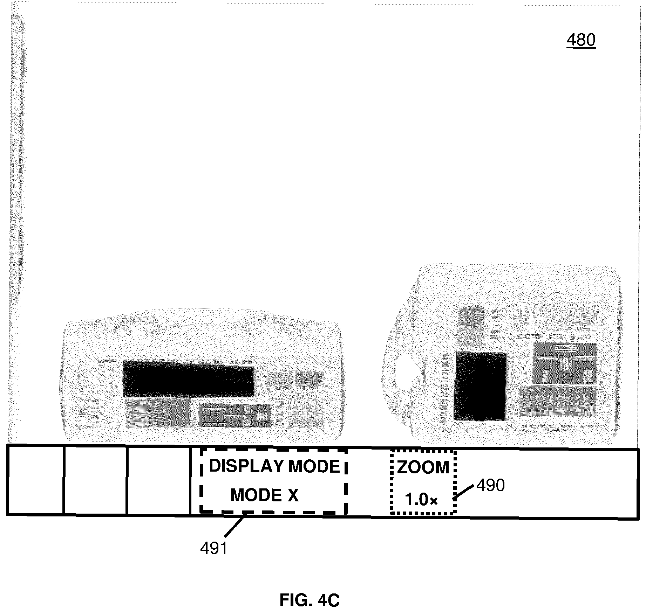

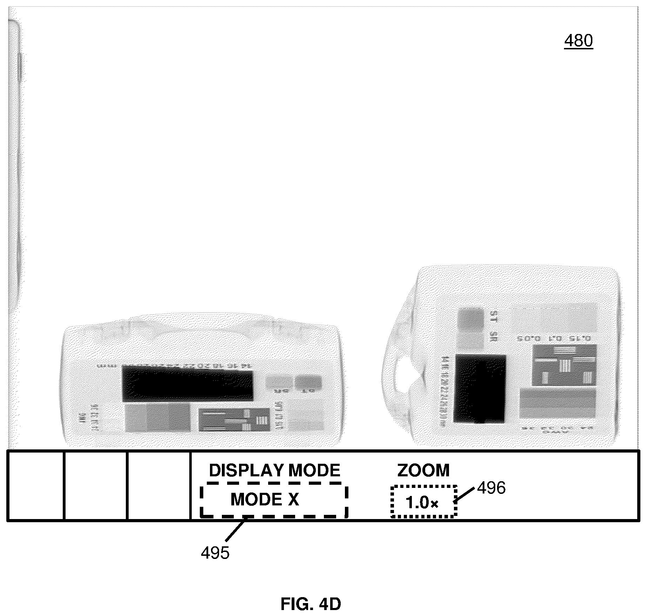

Attention is now drawn to **Figs. 4A** and **4B****.**

It has been mentioned above that a user interface can display data informative of a processing of the images displayed to the user.

The user interface can include different graphical elements. The graphical elements can correspond e.g. to icons. Each graphical element can include a title (defining the type of the graphical element) and a corresponding field (the field can include textual content, and/or numerical content and/or graphical content, such as a sign, which define the value/content of the graphical element). The corresponding field can be located in the vicinity of the title (for example, below the title, on the side of the title, etc.).

For example, a first graphical element can correspond to the zoom of the image, which includes a title **450** ("zoom") and the corresponding value **451** of the zoom (1.0, 1.5, 2.0, etc.). Note that the standard zoom (1.0) can be represented by the absence of a value (a dash symbol "-" can be used). This is not limitative. A second graphical element can correspond to the display mode of the image, which includes a title "display mode" **452** and the corresponding value **453** of the display mode. These examples are not limitative and other types of graphical elements and/or values can be present in a user interface.

The method of **Fig. 4A** enables identifying, in the user interface, the location, and the type of each graphical element, and extracting the corresponding field (value) associated with each graphical element.

The method of **Fig. 4A** includes obtaining (operation **400)** a set of data displayed on a user interface **480.** The set of data can correspond to the whole display (whole image) of the user interface, as displayed to the user on the display device **130,** or at least part thereof. In the example of **Fig. 4B****,** the set of data can correspond to the area **455.**

This set of data can be obtained from a memory of the device **132** (also called console) enabling the user to interact with the acquisition device **101.** At least part of this set of data is informative of processing operation(s) that have been performed on the image **456** displayed on the user interface.

The method of **Fig. 4A** further includes feeding (operation **410)** the set of data to a machine learning model **150.** The machine learning model **150** can include a neural network, such as a deep neural network (DNN). Various examples of deep neural networks have already been provided above.

As visible in **Fig. 1A****,** the machine learning model **150** can be implemented by the processing circuitry **104.** The machine learning model **150** enables identifying the location, in the set of data, of one or more graphical elements of the user interface. In addition, the machine learning model **150** is able to identify the type of each graphical element. It can, for example, indicate that at a first location in the set of data, a graphical element of a first type, is present (the first type corresponding, e.g., to the zoom value - this is not limitative), and that at a second location in the set of data, a graphical element of a second type, is present (the second type corresponding, e.g., to the display mode). The first location can correspond to a first bounding box **490** and the second location can correspond to a second bounding box **491.**

In some examples, the machine learning model **150** can be used to extract only the field (value) of each graphical element: it indicates that for a first graphical element of a first type, the value of the first graphical element is located at a first location, and that for a second graphical element of the second type, the value of the second graphical element is located at a second location.

In this case, the first location can correspond to a first bounding box **495,** and the second location can correspond to a second bounding box **496.**

Note that the method of **Fig. 4A** can be used to identify the location and the type of N graphical element(s) of the user interface, with N≥1.

Note that the extraction of the area(s) (bounding box) corresponding to the graphical element(s) informative of the processing operations used to generate the image, can be performed either by the machine learning model **150,** or the machine learning model **150** can output the location of these areas (together with the type of each graphical element in each of these areas), and an additional operation of cropping the user interface at these locations can be performed.

It can occur that for a given type of graphical element, the location of the graphical element varies slightly between different images of the user interface. This can be due to a difference in the resolution of the display device, to noise present in the display of the user interface, to different versions of the user interface used in different acquisition devices of the fleet, or to other factors.

For example, in a first console of a first acquisition device, a first version of the user interface is installed, whereas in a second console of a second acquisition device, a second version of the user interface is installed.

Other parameters of the graphical element(s) can vary between different acquisition devices, such as visual parameters of the graphical element(s) (colour, intensity, etc.), title of the graphical element(s), etc.

The variations in the colour/intensity can be due to the fact that a channel enabling display of a certain colour has encountered a malfunction, or due to the presence of noise.

Variations in the title of the elements can be due to the fact that different versions of the user interface may be used. For example, in a first user interface, the graphical element is entitled "display mode", and in a second user interface, the same element is entitled "image display".

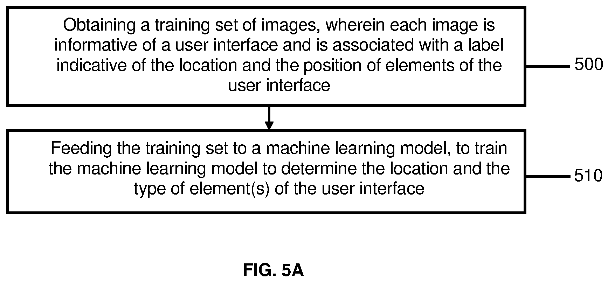

The machine learning model **150** can be trained to be robust to these variations, and can be trained to be able to identify the position and the type of each element of the user interface in spite of one or more of the variations mentioned above. **Fig. 5A** depicts a non-limitative example of a training method of the machine learning model **150.**

The method of **Fig. 5A** includes obtaining (operation **500)** a training set. The training set includes a plurality of images (training images) of a certain category of user interfaces. Each image includes one or more graphical elements (such as icons). Each graphical element is defined by a type. The type can be displayed in the element, as a title of the element (this is however not mandatory). Each graphical element includes a field, defining the "value" associated with this graphical element. The field can include textual and/or numerical and/or graphical content.

As mentioned above, the graphical elements (and their fields/values) can be informative of processing operations applied to image(s) acquired by the acquisition device **101.**

The images of the training set can be selected in order to cover different scenarios: different possible locations of each graphical element, different possible visual displays of each graphical element, different possible titles of each graphical element, different versions of the user interface, etc. The images can cover cases in which noise is present in the display of the user interface, or other factors that may affect the display of the user interface.

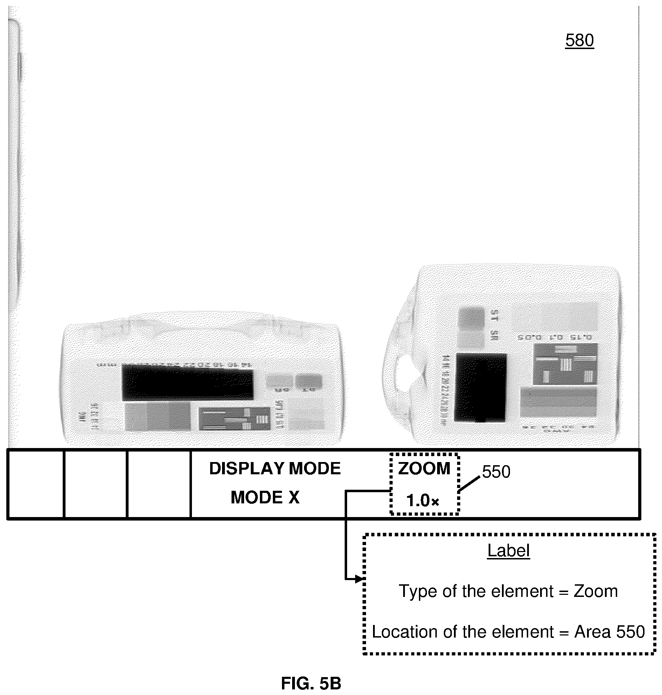

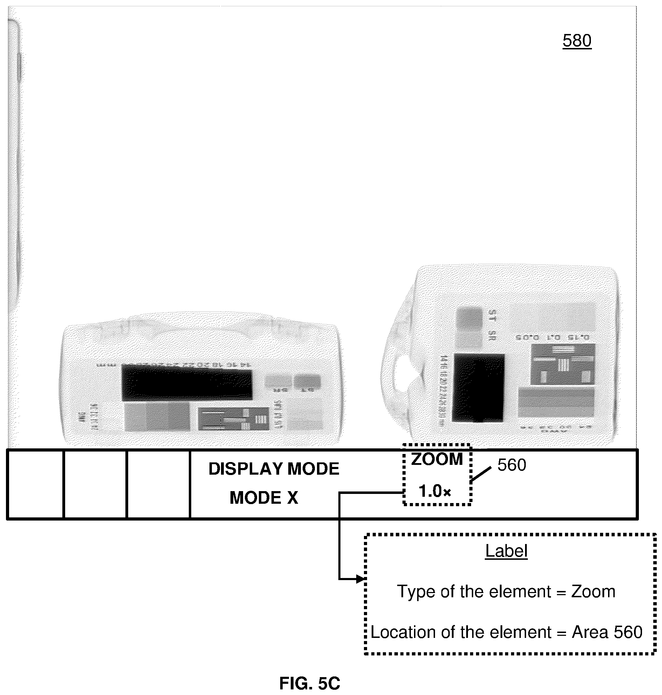

Each image of the training set is associated with a label. The label indicates, for each element, the position of the graphical element in the image, and the type of the graphical element. A non-limitative example is illustrated in **Figs. 5B** and **5C****.** In some examples, the position of the graphical element includes a first position corresponding to the title of the graphical element, and a second position corresponding to the field/value of the graphical element.

In **Fig. 5B****,** a first label indicates that in the area **550,** an element of type "zoom" is located.

In **Fig. 5C****,** a second label indicates that in the area **560,** an element of type "zoom" is located. Note that the area **560** differs from the area **550.** As mentioned above, this can be due to the presence of noise in the display of the display unit.

The method of **Fig. 5A** further includes feeding (operation **510)** the training set (labelled images) to the machine learning model **150** for its training. Training methods such as Backpropagation can be used. This is however not limitative.

The machine learning model **150** is trained to determine, in each given training image of the plurality of training images, a location and a type of one or more graphical elements of a given user interface, informative of processing operations used to generate an image of one or more elements acquired by a given acquisition device. Note that the given user interface can be the same for all training images, or the various given interfaces can correspond one to the other (according to a correspondence criterion). For example, they can all correspond to the same category of user interface (the same version of user interface, or versions which are similar in terms of their display and content). The different training images can be derived from images of a user interface associated with the same acquisition device, or with different acquisition devices. For example, some training images can be based on acquisitions performed by a first acquisition device, and other training images can be based on acquisitions performed by a second acquisition device (which may be located at a different location).

After its training, the machine learning model **150** is able to detect, in an image of a user interface, the position and the type of element(s) of a certain category of user interface (since it has been fed with training images of various user interfaces of this category). As mentioned above, although certain variations can exist in the display of the elements within the category (due to the existence of different versions of the user interface, and/or due to noise present in the display of the user interface), the machine learning model **150** is robust and can still determine the position and the type of the element(s) of interest (as defined in the labels of the training images).

The machine learning model **150** can be used to extract the location and the type of one or more graphical elements of a user interface which corresponds to the user interface present in the training images according to the correspondence criterion (for example, same category of user interface, or same version of user interface, or at least a similar version of user interface with similar content and display).

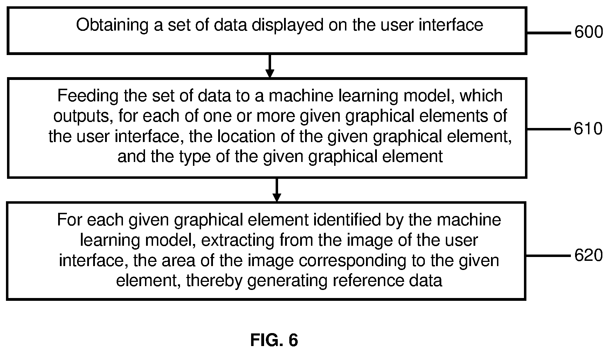

Attention is now drawn to **Fig. 6****.**

The method of **Fig. 6** enables generating, for each given element of a user interface including one or more elements, a template which indicates that the given element is in a desired state.

This method can be used for example in conjunction with the method of **Fig. 2****,** in order to detect that a given image displayed on a user interface meets a validity criterion.

Assume that the user interface currently displays graphical element(s) which are in a desired state, that is to say that the graphical element(s) are informative of processing operation(s) used to generate an image of elements acquired by the acquisition device, that meets the validity criterion. In other words, when the graphical elements are in the desired state, this indicates that the current image meets the validity criterion (see **Fig. 2**). The method of **Fig. 6** corresponds to a "setting phase", in which the user of the console is requested to manipulate an image acquired by the acquisition device such that the image meets the validity criterion. The user must therefore select e.g., the required zoom, the required display mode, and all the required processing operations in the console. This will induce a corresponding display of the graphical element(s) on the user interface, in the desired state.

For example, the user interface indicates that the first graphical element (corresponding to the "zoom") has a value equal to 1.0, and that the second graphical element (corresponding to the "display mode") corresponds to a desired mode in which all colours are displayed. This can be obtained by selecting, in the console, the appropriate values for the processing operation(s).

The method of **Fig. 6** includes obtaining (operation **600)** a set of data displayed on the user interface. The set of data can correspond to the whole image of the user interface, or to at least part thereof. This set of data is also called a setting image of the user interface. The setting image corresponds to a state of the user interface displaying graphical element(s) indicative of processing operation(s) used to generate an image of elements acquired by the acquisition device that meets the validity criterion.

The method of **Fig. 6** further includes feeding (operation **610)** the set of data to a machine learning model. The machine learning model can correspond to the machine learning model **150** trained using the method of **Fig. 5A****.**

The machine learning model **150** outputs, for each of one or more given graphical elements of the user interface, data D_{graph_elements} informative of the location of the given graphical element, and the type of the given graphical element. Note that the graphical elements that are identified depend on the training of the machine learning model. In other words, the machine learning model **150** will identify in the setting image the same graphical element(s) as the graphical element(s) that were present, designated in the labels of the training images.

The method of **Fig. 6** can include, for each given graphical element identified by the machine learning model **150,** extracting (operation **620)** from the image of the user interface, the area of the image corresponding to the given element. This can include cropping, from the image of the user interface, the area of the image corresponding to the given element. Note that the machine learning model **150** can, in some examples, perform this cropping. In other examples, the output of the machine learning model **150** is used to perform this cropping.

This enables obtaining reference data for the user interface. In particular, this enables obtaining reference data for each graphical element, informative of the visual display of the graphical element in a desired state (in which each graphical element is informative of processing operation(s) used to generate an image meeting the validity criterion).

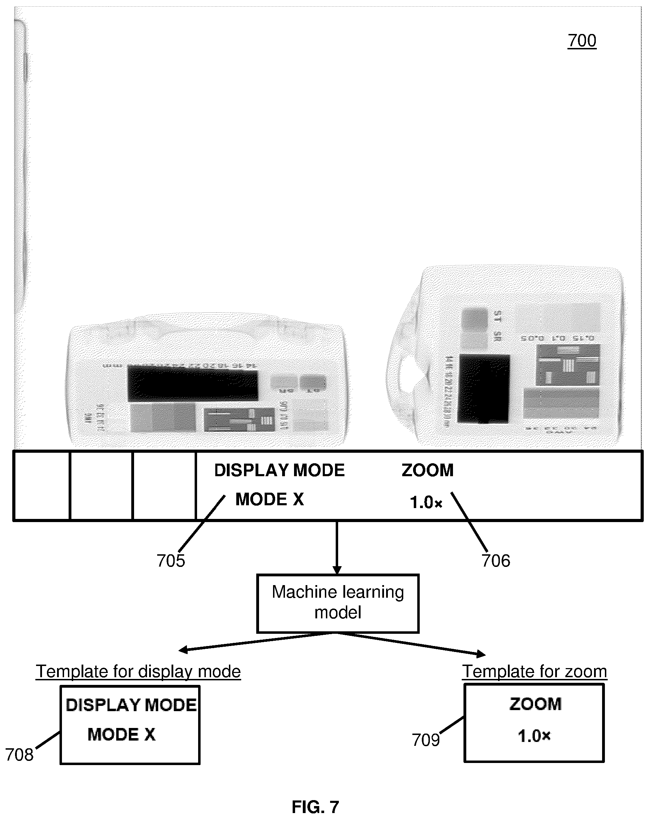

A non-limitative example is illustrated in **Fig. 7****,** in which a setting image **700** of the user interface is fed to the machine learning model. The user interface is in a desired state, in which the graphical elements are informative of a display of the image according to a reference display mode. In this example, the user interface includes a first graphical element **705** and a second graphical element **706.**

The machine learning model **150** identifies the location and the type of the first graphical element **705,** which enables extracting a first reference image **708** from the user interface, which corresponds to the first graphical element. This first reference image **708** can be stored in a computer memory, as corresponding to reference data (a template) for the first graphical element in a desired state.

The machine learning model **150** identifies the location and the type of the second graphical element **706,** which enables extracting a second reference image **709** from the user interface, which corresponds to the second graphical element. This second reference image **709** can be stored in a computer memory, as corresponding to reference data (a template) for the second graphical element in a desired state.

In other words, the method enables generating, in an automatic way, template(s) (also called reference data, or reference image(s)) for various graphical elements of the user interface, in a configuration in which the graphical elements are in a desired or reference state.

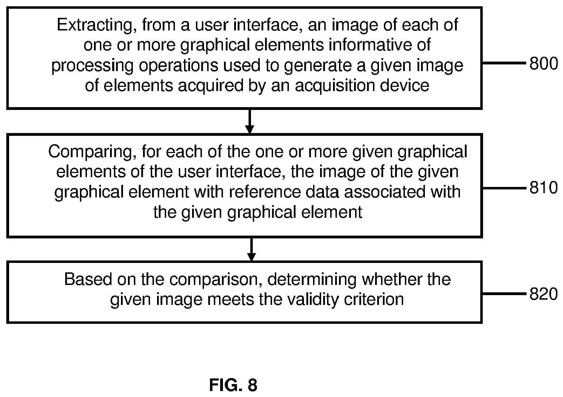

Attention is now drawn to **Fig. 8****.**

Assume that reference data (templates) have been generated for one or more graphical elements (which are of interest for determining whether the image displayed on the user interface meets the validity criterion) using the method of **Fig. 6****.** The method of **Fig. 6** can be viewed as a "setting phase" in which reference data are generated. The method of **Fig. 8** corresponds to the "prediction phase" (also called run-time phase), in which the template(s) are used to detect whether the graphical elements are in the desired state. Since these graphical elements reflect processing operations used to generate an image of elements acquired by the acquisition device, when the graphical elements are in the desired state, this indicates that the image meets the validity criterion.

Assume that the user interface currently displays graphical elements reflecting processing operations used to generate an image.

The method of **Fig. 8** includes identifying (operation **800)** the location and the type of each of one or more graphical elements of the user interface. This enables extracting, from the user interface, an image of each of the one or more graphical elements. The one or more graphical elements are informative of processing operations used to generate an image of elements acquired by an acquisition device.

In some examples, data generated by the method of **Fig. 6** (in which the template of each graphical element is generated) can be used. Indeed, at step **610** of the method of **Fig. 6****,** the location and type of each graphical element have been identified. This knowledge can be used to identify the location and the type of each graphical element at operation **800.**

In some examples, operation **800** can include feeding the image of the user interface to a machine learning model (trained using the method of **Fig. 5A****)** which identifies the location and type of each graphical element.

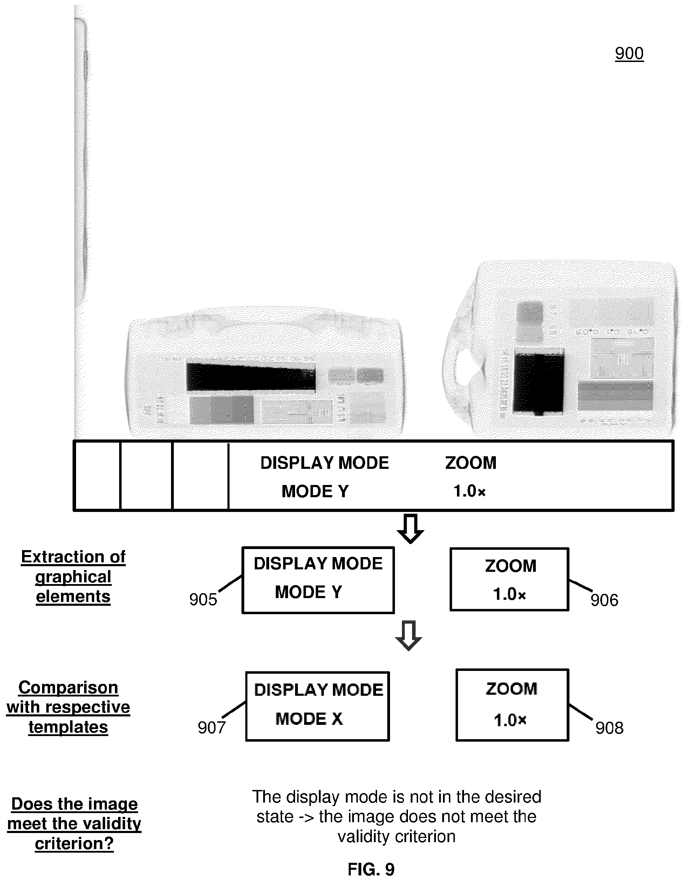

A non-limitative example of operation **800** is illustrated in **Fig. 9****,** in which a first image **905** of the first graphical element (which is identified as corresponding to the "display mode") has been extracted from the current display **900** of the user interface, and a second image **906** of the second graphical element (which is identified as corresponding to the "zoom") has been extracted from the current display **900** of the user interface.

The method of **Fig. 8** further includes (operation **810)** comparing, for each of one or more given graphical elements of the user interface, the image of the given graphical element (extracted from the current display **900** of the user interface) with reference data (template) associated with the given graphical element (as generated using the method of **Fig. 6****).** As mentioned above, the reference data reflects the visual aspect of the graphical element in the desired state, which reflects that the current image meets the validity criterion.

In the non-limitative example of **Fig. 9****,** the current image **905** of the first graphical element is compared to its respective reference data (template image) **907.** The comparison can include cross-correlation techniques, pixel-to-pixel comparison, or other techniques enabling determining the level of matching between two different images. In this example, the comparison indicates a mismatch.

The current image **906** of the second graphical element is compared to its respective reference data (template image) **908.** In this example, the comparison indicates a match.

Based on this comparison, the method further includes determining whether the image meets the validity criterion.

If the comparison indicates a match of all graphical elements with their respective reference data, it can be concluded that the image meets the validity criterion. As mentioned with reference to **Fig. 2****,** responsive to determining that the validity criterion is met, the method can include using the given image, or data informative thereof, and the detection algorithm **112,** to determine whether one or more suspicious elements are present in the given image.

If the comparison indicates a mismatch of at least one graphical element with its respective reference data, it can be concluded that the image does not meet the validity criterion. As mentioned with reference to **Fig. 2****,** responsive to determining that the validity criterion is not met, the method can include preventing the given image from being processed by the detection algorithm **112.**

Note that it can occur that the location and/or of the graphical elements undergoes variations over time. For example, the user interface can be updated to a new version. In this case, at least part of the process can be repeated. A machine learning model can be trained to learn how to identify location and type of the relevant graphical elements, as explained with reference to **Fig. 5A****.** This machine learning model is then used, in a setting phase, on a setting image of the user interface (in which the one or more graphical elements are informative of one or more processing operations used to generate an image matching the validity criterion), as explained with reference to **Fig. 6****.** This enables generating new reference data for each graphical element. Once the new reference data have been generated, the method of **Fig. 8** can be performed each time the user interface is displayed, to determine whether the current image meets the validity criterion.

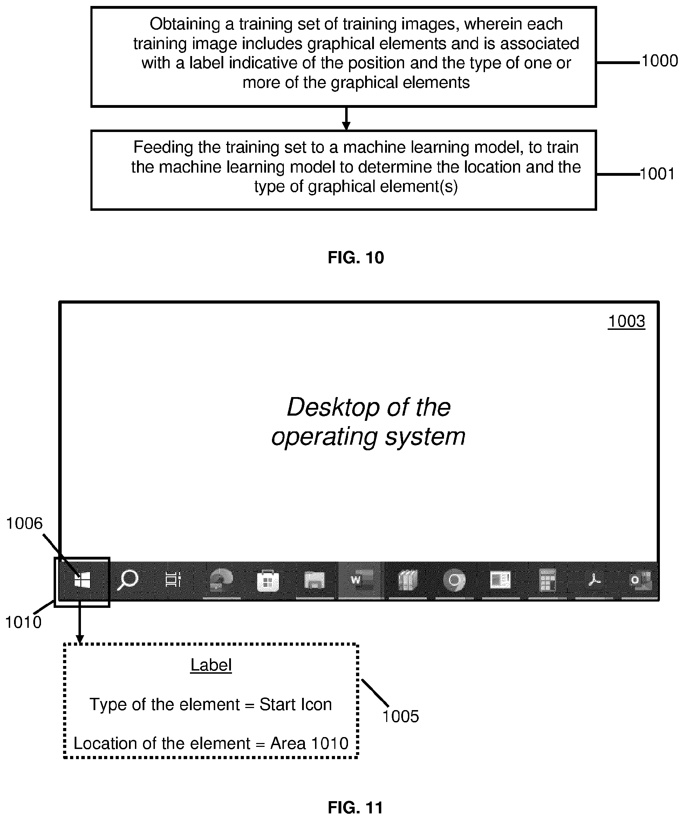

Attention is now drawn to **Fig. 10****.**

In the examples provided above, it has been detected whether graphical elements, reflecting processing operations used to generate an image, are in a desired state (also called valid state). This enables determining whether the image meet the validity criterion, in order to determine whether this image can be processed to detect suspicious elements.

This is not limitative, and the various methods described above can be applied to different technical domains in which graphical elements are displayed to a user.

Assume that it is intended to detect whether one or more graphical elements are in a desired state. For example, this can be used to detect whether an operator of a CT machine in the medical domain has performed the required operations, whether a user of an operating system and/or of a browser has performed certain interactions, etc. The number of applications of the proposed solution is wide. Note that the valid state of a graphical element and/or of a user interface can be defined by a user depending on the applications. It can occur that for two different applications, the same graphical element is considered as being in a valid state for one application, and is considered as being in a invalid state in another application.

Assume that a machine learning model has been trained to determine the location and the type of given graphical element(s) of one or more graphical elements displayed on an output device. Note that the graphical elements can be part of a user interface, but this is not mandatory.

As illustrated in **Fig. 10****,** this training can follow a similar method as the one described with reference to **Fig. 5A****.** A machine learning model (such as a neural network or a deep neural network - see non-limitative examples above) is fed (operation **1000)** with a training set of training images including graphical elements (e.g., icons, buttons, predefined areas of interest, etc.). The machine learning model can be implemented by a processing circuitry.

The graphical elements can include interactive elements (with which the user can interact, such as clickable buttons) and/or graphical elements which display some information, but which are not necessarily interactive.

Each training image is associated with a label, which indicates the position of one or more graphical elements, and its type. The label indicates the position of the graphical element(s) of interest, for which it is intended to train the machine learning model to detect and identify them.

A non-limitative example of a training image **1003** is illustrated in **Fig. 11****.** This training image **1003** is associated with a label **1005,** which includes, for a graphical element **1006,** the type of icon (start icon) and the location of the graphical element (area **1010).**

The training set is fed (operation **1001)** to the machine learning model, to train the machine learning model to determine the location and the type of graphical element(s), as defined in the labels of the training images.

Note that the training images can be selected to include different states of the graphical elements, in order to cover possible variations of the display of the graphical elements (variations in their position, color, shape, resolution, etc.).

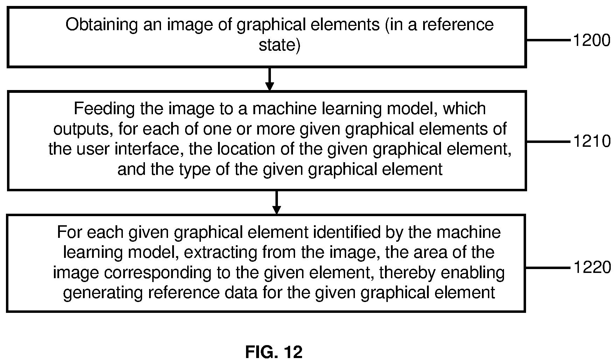

Once the machine learning model has been trained, it can be used to generate reference data (templates) for one or more of the graphical elements, as illustrated in **Fig. 12****.**

The method of **Fig. 12** enables generating, for each given graphical element, a template which indicates that the given graphical element is in a desired state.

Assume that a display device (such as a screen) currently displays an image with graphical element(s) which are in a desired state (also called reference state). Note that the desired state can be defined by a user.

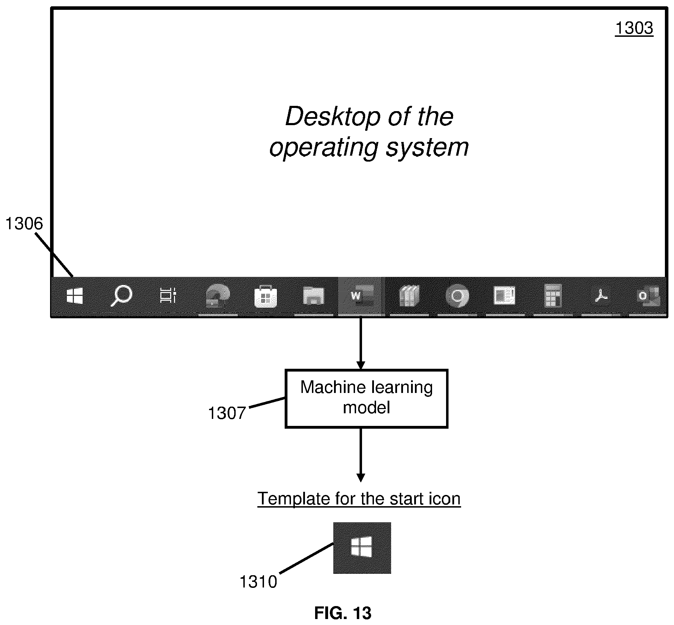

A non-limitative example is illustrated in **Fig. 13****,** in which the image **1303** includes the graphical element **1306** in a desired state.

The method of **Fig. 12** includes obtaining (operation **1200)** an image (such as image **1003)** including one or more graphical elements in a desired state (also called reference state or valid state). This image is designated as a setting image.

The method of **Fig. 12** further includes feeding (operation **1210)** the image to a machine learning model. The machine learning model can correspond to the machine learning model trained using the method of **Fig. 10****.**

The machine learning model outputs, for each of one or more given graphical elements, the location of the given graphical element, and the type of the given graphical element. Note that the graphical elements that are identified depend on the training of the machine learning model. The location and the type of each given graphical element can be stored in a computer memory, for further usage, such as at operation **1410** described hereinafter.

The method of **Fig. 12** can include, for each given graphical element identified by the machine learning model, extracting (operation **1220)** from the image of the user interface, the area of the image corresponding to the given element. This can include cropping, from the image of the user interface, the area of the image corresponding to the given element. Note that the machine learning model can, in some examples, perform this cropping. In other examples, the output of the machine learning model is used to perform this cropping.

This enables obtaining reference data (reference image) for each graphical element, informative of the visual display of the graphical element in a desired state.

A non-limitative example is illustrated in **Fig. 13****,** in which an image **1303** of the desktop of an operating system is fed to the machine learning model. In this image **1303,** the graphical element **1306** (start icon) is in a desired state (reference state). In this desired state, the start icon has not been selected by the user.

The machine learning model **1307** (which can be implemented by a processing circuitry) identifies the location and the type of the graphical element **1306,** which enables extracting an image **1310** corresponding to the graphical element **1306.** This image **1310** can be stored in a computer memory, as corresponding to reference data (template) for the graphical element **1306** in a desired state.

In other words, the method enables generating, in an automatic way, template(s) (also called reference data, or reference image(s)) for graphical elements in a desired or reference state. The reference data can be stored in a database, which can store, based on the position and/or the type of each graphical element, the corresponding reference data.

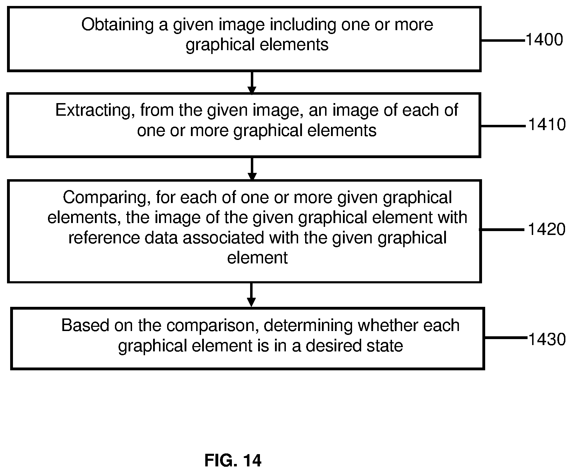

Attention is now drawn to **Fig. 14****.**

Assume that reference data (templates) have been generated for each graphical element, using the method of **Fig. 13****.** The method of **Fig. 13** can be viewed as a "training phase" in which reference data are generated. The method of **Fig. 14** corresponds to the "prediction phase" (also called run-time phase), in which the template(s) are used to detect whether the graphical elements are in the desired state.

Assume that one or more graphical elements (e.g. of a user interface) are currently displayed on a display unit (such as a screen of a device).

The method of **Fig. 14** includes obtaining (operation **1400)** a given image including the one or more graphical elements, as displayed on the display unit. As mentioned above, the given image can be extracted by using a video frame grabber and/or a capture device.

The graphical elements reflect operations performed by a user, such as selection of elements, launch of applications, etc. Depending on the technical application, the graphical elements can reflect different operations performed by a user. For example, the graphical elements can belong to a user interface in which a doctor can select various parameters of a software controlling image acquisition by an acquisition device (such as an X-ray acquisition device, a scanner, or a CT-scan). In other examples, the graphical elements can reflect selection performed by a user in the user interface of an operating system of a computerized device (such as a laptop, a computer or a smartphone). In other examples, the graphical elements can reflect interaction of a user with graphical elements of a user interface enabling control of a television screen. In other examples, the graphical elements can reflect interaction of a user with graphical elements of a user interface enabling control of a vehicle (e.g., a car, an aircraft, a UAV, etc.). These examples are not limitative.

The method of **Fig. 14** includes identifying (operation **1410)** the location and the type of each of one or more graphical elements. The one or more graphical elements that are identified at this stage correspond to the graphical element(s) which have been designated in the label of the training images used to train the machine learning model (as explained with reference to **Fig. 10****).**

Operation **1410** enables extracting, from the given image, an image of each of the graphical element(s). The image of each graphical element can be cropped from the given image.

In some examples, data generated in the method of **Fig. 12** (in which the reference data of each graphical element has been generated) can be used. Indeed, at step **1210** of the method of **Fig. 12****,** the location and the type of each graphical element have been identified. This knowledge can be used to identify the location and the type of each graphical element at operation **1410.**

In some examples, operation **1410** can include feeding the given image of the user interface to a machine learning model (trained using the method of **Fig. 10**) to determine the location and type of each graphical element.

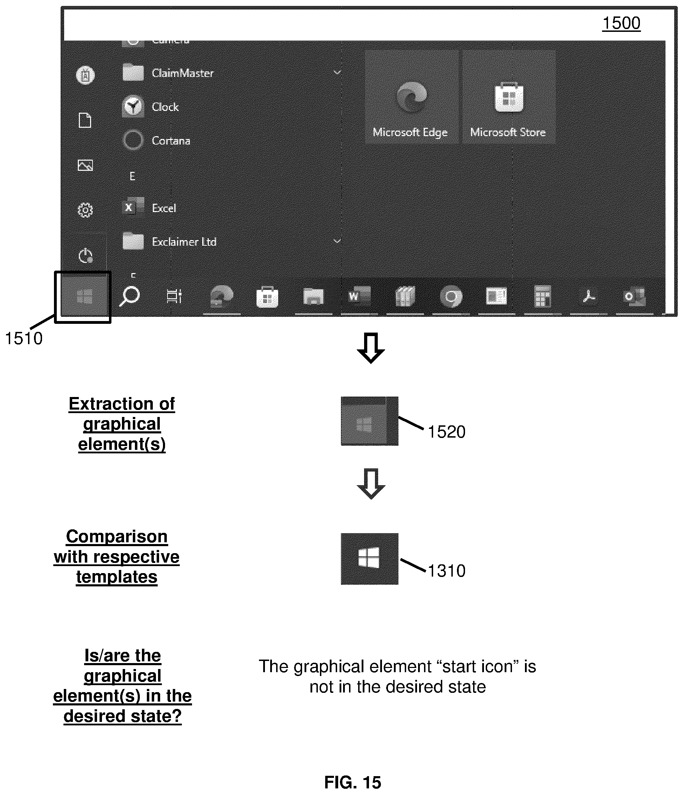

A non-limitative example of operation **1410** is illustrated in **Fig. 15****.** Assume that an image **1500** (corresponding e.g. to the image displayed to the user on an output device) has been obtained, which includes a plurality of graphical elements. In this example, the image **1500** is informative of the desktop of an operating system controlled by a user.

The location of the graphical element "start icon" is identified as area **1510** in the image **1500.** An image **1520** of the graphical element "start icon" has been extracted from the image **1500.**

The method of **Fig. 14** further includes (operation **1410)** comparing, for each of one or more given graphical elements, the image of the given graphical element (extracted from the image) with reference data (template) associated with the given graphical element (as generated using the method of **Fig. 12**). It has mentioned above with reference to operation **1210** that the location and the type of each graphical element has been identified in a setting image. This location and the type of each graphical element can be used to extract the image of each given graphical element from the given image, and to compare it with the corresponding reference data. Similarly, the location and/or the type of each graphical element can be used to obtain, from a database, the corresponding reference data (which can be stored based on the position and/or type of each graphical element).

As mentioned above, the reference data of each graphical element reflects the visual aspect of this graphical element in the desired state (also called valid state). In some examples, the reference data have been obtained by feeding a setting image to a machine learning model, which has been trained to identify the location and the type of graphical elements in training images, which match the graphical elements of the given image (obtained at operation **1400)** according to a matching criterion. For example, the graphical elements of the training images and of the given image are of the same type, or of a software of the same version (e.g., same browser, same operating system), etc. Although the graphical elements of the training images are of the same type or same category, variations in a display of the one or more given graphical elements can be present among the training images of the training set, in order to make the machine learning model more robust to the identification of the position and the type of the graphical elements.

In the non-limitative example of **Fig. 15****,** the current image **1520** of the graphical element "start icon" is compared to its respective reference data (template image) **1510.** The comparison can include cross-correlation techniques, pixel-to-pixel comparison, or other techniques enabling determining the level of matching between two different images. In this example, the comparison indicates a mismatch.

For each graphical element, if there is a match, this indicates that the graphical element is in the desired state (valid state). If there is a mismatch, this indicates that the graphical element is not in the desired state.

Depending on the technical application, various actions can be performed, such as display of data.

In some examples, detection of a mismatch (or of a match) can trigger an alarm (audio and/or visual alarm), and/or can trigger launch of a certain application, and/or can be used for performing statistical analysis of the behavior of the user, and/or can trigger display of data on the display unit, or any other relevant actions.

Note that it can occur that the location and/or of the graphical elements undergoes variations over time. In this case, at least part of the process can be repeated. A machine learning model can be trained to learn how to identify the location and the type of the relevant graphical elements. This machine learning model is then used in the method of **Fig. 12** to generate new reference data for each graphical element. Once the new reference data have been generated, the method of **Fig. 14** can be performed each time an image of the graphical elements is displayed, to determine whether each graphical element is in the desired state.

In the detailed description, numerous specific details have been set forth in order to provide a thorough understanding of the disclosure. However, it will be understood by those skilled in the art that the presently disclosed subject matter may be practiced without these specific details. In other instances, well-known methods, procedures, components and circuits have not been described in detail so as not to obscure the presently disclosed subject matter.

Unless specifically stated otherwise, as apparent from the aforementioned discussions, it is appreciated that throughout the specification discussions utilizing terms such as "obtaining", "applying", "determining", "performing", "using", "increasing", "reducing", "estimating", or the like, refer to the action(s) and/or process(es) of a processing circuitry that manipulates and/or transforms data into other data, said data represented as physical, such as electronic, quantities and/or said data representing the physical objects.

The terms "computer" or "computer-based system" should be expansively construed to include any kind of hardware-based electronic device with a data processing circuitry (e.g., digital signal processor (DSP), a GPU, a TPU, a field programmable gate array (FPGA), an application specific integrated circuit (ASIC), microcontroller, microprocessor etc.), including, by way of non-limiting example, the computer-based system **103** of **Fig. 1** and respective parts thereof disclosed in the present application. The data processing circuitry (designated also as processing circuitry) can comprise, for example, one or more processors operatively connected to computer memory, loaded with executable instructions for executing operations, as further described below. The data processing circuitry encompasses a single processor or multiple processors, which may be located in the same geographical zone, or may, at least partially, be located in different zones, and may be able to communicate together. The one or more processors can represent one or more general-purpose processing devices such as a microprocessor, a central processing unit, or the like. More particularly, a given processor may be one of: a complex instruction set computing (CISC) microprocessor, a reduced instruction set computing (RISC) microprocessor, a very long instruction word (VLIW) microprocessor, a processor implementing other instruction sets, or a processor implementing a combination of instruction sets. The one or more processors may also be one or more special-purpose processing devices such as an application specific integrated circuit (ASIC), a field programmable gate array (FPGA), a digital signal processor (DSP), a network processor, or the like. The one or more processors are configured to execute instructions for performing the operations and steps discussed herein.

The memories referred to herein can comprise one or more of the following: internal memory, such as, e.g., processor registers and cache, etc., main memory such as, e.g., read-only memory (ROM), flash memory, dynamic random access memory (DRAM) such as synchronous DRAM (SDRAM) or Rambus DRAM (RDRAM), etc.

The term "non-transitory computer readable medium" used herein should be expansively construed to cover any volatile or non-volatile computer memory suitable to the presently disclosed subject matter. The terms should be taken to include a single medium or multiple media (e.g., a centralized or distributed database, and/or associated caches and servers) that store the one or more sets of instructions. The terms shall also be taken to include any medium that is capable of storing or encoding a set of instructions for execution by the computer and that cause the computer to perform any one or more of the methodologies of the present disclosure. The terms shall accordingly be taken to include, but not be limited to, a read only memory ("ROM"), random access memory ("RAM"), magnetic disk storage media, optical storage media, flash memory devices, etc.

It is to be noted that while the present disclosure refers to the processing circuitry **104** being configured to perform various functionalities and/or operations, the functionalities/operations can be performed by the one or more processors of the processing circuitry **104** in various ways. By way of example, the operations described hereinafter can be performed by a specific processor, or by a combination of processors. The operations described hereinafter can thus be performed by respective processors (or processor combinations) in the processing circuitry 104, while, optionally, at least some of these operations may be performed by the same processor. The present disclosure should not be limited to be construed as one single processor always performing all the operations.

It is appreciated that, unless specifically stated otherwise, certain features of the presently disclosed subject matter, which are described in the context of separate embodiments, can also be provided in combination in a single embodiment. Conversely, various features of the presently disclosed subject matter, which are described in the context of a single embodiment, can also be provided separately or in any suitable subcombination. In the following detailed description, numerous specific details are set forth in order to provide a thorough understanding of the methods and apparatus.

In embodiments of the presently disclosed subject matter, fewer, more, and/or different stages than those shown in the methods of **Figs. 2****,** **4A****,** **5A****,** **6****,** **8****,** **10****,** **12****,** and **14** may be executed. In embodiments of the presently disclosed subject matter, one or more stages illustrated in the methods of **Figs. 2****,** **4A****,** **5A****,** **6****,** **8****,** **10****,** **12****,** and **14** may be executed in a different order, and/or one or more groups of stages may be executed simultaneously.

It is to be understood that the invention is not limited in its application to the details set forth in the description contained herein or illustrated in the drawings.

It will also be understood that the system according to the invention may be, at least partly, implemented on a suitably programmed computer. Likewise, the invention contemplates a computer program being readable by a computer for executing the method of the invention. The invention further contemplates a non-transitory computer-readable memory tangibly embodying a program of instructions executable by the computer for executing the method of the invention.

The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

Those skilled in the art will readily appreciate that various modifications and changes can be applied to the embodiments of the invention as hereinbefore described without departing from its scope, defined in and by the appended claims.

## Claims

1. A system comprising one or more processing circuitries configured to:
obtain data displayed on a user interface, informative of one or more processing operations used to generate at least one given image informative of one or more elements acquired by an acquisition device,
use the data to determine whether the at least one given image meets a validity criterion, and
responsive to determining that the validity criterion is met, use the at least one given image, or data informative thereof, and a detection algorithm, to determine whether one or more suspicious elements are present in the at least one given image.

2. The system of claim 1, configured to, responsive to determining that the validity criterion is not met, prevent the at least one given image from being fed to the detection algorithm.

3. The system of claim 1 or of claim 2, wherein a display of the given image depends on said one or more processing operations.

4. The system of any one of claims 1 to 3, wherein the data correspond to at least part of one or more graphical elements of the user interface displaying information on said one or more processing operations.

5. The system of any one of claims 1 to 4, wherein the validity criterion depends on training images used to train the detection algorithm.

6. The system of any one of claims 1 to 5, wherein the validity criterion is met when one or more processing operations used to generate the given image correspond to one or more processing operations used to generate training images which have been used to train the detection algorithm.

7. The system of any one of claims 1 to 6, wherein the data informative of the one or more processing operations comprises at least one of (i), (ii) or (iii):
(i) data informative of a zoom used to display the given image;
(ii) data informative of one or more filtering operations used to generate the given image;
(iii) data informative of the one or more processing operations comprises a display mode of the given image.

8. The system of any one of claims 1 to 7, wherein obtaining said data comprises using a machine learning model to determine, in the user interface, a position and a type of one or more graphical elements informative of the one or more processing operations.

9. The system of any one of claims 1 to 8, wherein the data informative of the one or more processing operations used to generate the at least one given image comprises data informative of one or more graphical elements of the user interface, wherein the system is configured to use a machine learning model to determine, in a setting image of the user interface, data D_{graph_elements} informative of a position and a type of the one or more graphical elements informative of the one or more processing operations, and to use said data D_{graph_elements} to extract the data informative of one or more graphical elements of the user interface.

10. The system of any one of claims 1 to 9, configured to obtain a machine learning model which has been trained to determine, in each given training image of a plurality of training images, a location and a type of one or more graphical elements of a given user interface, informative of processing operations used to generate an image of one or more elements acquired by a given acquisition device.

11. The system of any one of claims 1 to 10, wherein at least one of (i) or (ii) is met:
(i) the system is configured to use a machine learning model to extract, from a setting image of the user interface in which one or more graphical elements of the user interface are informative of one or more processing operations used to generate an image meeting the validity criterion, one or more reference images of said one or more graphical elements;
(ii) the system is configured to use a machine learning model to extract, from a setting image of the user interface in which one or more graphical elements of the user interface are informative of one or more processing operations used to generate an image meeting the validity criterion, one or more reference images of said one or more graphical elements, and compare at least part of the data displayed on the user interface with the one or more reference images of said one or more graphical elements to determine whether the given image matches the validity criterion.

12. The system of any one of claims 1 to 11, wherein at least one of (i), (ii) or (iii) is met:
(i) the data is informative of one or more graphical elements of the user interface, wherein using the data to determine whether the at least one given image meets the validity criterion comprises comparing the data with reference data informative of the one or more graphical elements in a state in which they are informative of one or more processing operations used to generate an image matching the validity criterion;
(ii) the data is informative of one or more graphical elements of the user interface, wherein using the data to determine whether the at least one given image meets the validity criterion comprises comparing the data with reference data informative of the one or more graphical elements in a state in which they are informative of one or more processing operations used to generate an image matching the validity criterion, and determining that the given image meets the validity criterion when the data matches the reference data;
(iii) the data is informative of one or more graphical elements of the user interface, wherein using the data to determine whether the at least one given image meets the validity criterion comprises comparing the data with reference data informative of the one or more graphical elements in a state in which they are informative of one or more processing operations used to generate an image matching the validity criterion, and determining that the given image meets the validity criterion when the data matches the reference data, wherein the system is configured to extract, from a setting image of the user interface in which the one or more graphical elements are informative of one or more processing operations used to generate an image matching the validity criterion, the reference data.

13. The system of claim 12, configured to use a machine learning model trained to determine a location and a type of the one or more graphical elements to extract, from the setting image, the reference data.

14. A method comprising, by one or more processing circuitries:
obtaining data displayed on a user interface, informative of one or more processing operations used to generate at least one given image informative of one or more elements acquired by an acquisition device,
using the data to determine whether the at least one given image meets a validity criterion, and
responsive to determining that the validity criterion is met, using the at least one given image, or data informative thereof, and a detection algorithm to determine whether one or more suspicious elements are present in the at least one given image.

15. A non-transitory computer readable medium comprising instructions that, when executed by one or more computers, cause the at least one or more computers to perform:
obtaining data displayed on a user interface, informative of one or more processing operations used to generate at least one given image informative of one or more elements acquired by an acquisition device,
using the data to determine whether the at least one given image meets a validity criterion, and
responsive to determining that the validity criterion is met, using the at least one given image, or data informative thereof, and a detection algorithm to determine whether one or more suspicious elements are present in the at least one given image.
